# EUROPÄISCHE PATENTANMELDUNG

(11) **EP 0 830 049 A2**
(43) Veröffentlichungstag der Anmeldung: **18.03.1998**
(21) Anmeldenummer: 97202639.7
(22) Anmeldetag: 28.08.1997
(51) Int. Cl.: H04Q 11/04, H04L 12/28

(54) **Lokales, nach dem asynchronen Transfermodus arbeitendes Netzwerk in Ringstruktur mit drahtlosen Terminals**

(30) Priorität: 07.09.1996 DE 19636394
(71) Anmelder: Philips Patentverwaltung GmbH, 22335 Hamburg (DE); Philips Electronics N.V., 5621 BA Eindhoven (NL)
(72) Erfinder: Du, Yonggang, Dr.-Ing., Röntgenstrasse 24, 22335 Hamburg (DE)
(74) Vertreter: Volmer, Georg, Dipl.-Ing.

(57) **Zusammenfassung**

Die Erfindung bezieht sich auf ein lokales, nach dem asynchronen Transfermodus (ATM) arbeitendes Netzwerk zur Übertragung von Zellen mit mehreren in einem Ring geschalteten und über Ringanschlüsse (29 bis 32) gekoppelten Netzwerkschnittstellen (1 bis 8), die jeweils eine Koppelvorrichtung (24) enthalten. Zur Schaffung eines flexibleren lokalen Netzwerks enthält wenigstens eine Netzwerkschnittstelle (1 bis 8) eine Funkvorrichtung (33) zum Austausch von Daten mit wenigstens einem im Funkabdeckungsbereich der Netzwerkschnittstelle (1 bis 8) liegenden Terminal (9 bis 21). Zum Transport Steuerung der Zellen innerhalb einer Netzwerkschnittstelle ist die Koppelvorrichtung (24) vorgesehen.

## Beschreibung

Die Erfindung bezieht sich auf ein lokales, nach dem asynchronen Transfermodus (ATM) arbeitendes Netzwerk zur Übertragung von Zellen mit mehreren in einem Ring geschalteten und über Ringanschlüsse gekoppelten Netzwerkschnittstellen, die jeweils eine Koppelvorrichtung enthalten.

Ein lokales Netzwerk (LAN), welches nach dem asynchronen Transfermodus arbeitet, ist aus der EP-0 641 105 A2 bekannt. Dieses Netzwerk enthält mehrere Netzwerkschnittstellen, die jeweils einen Sende- und Empfangsanschluß aufweisen, und mit der Netzwerkschnittstelle über Drahtverbindungen gekoppelte Stationen. Über den so gebildeten Ring werden Zellen übertragen, die Informationen über den Bestimmungsort beispielsweise einer bestimmten Station enthalten. Eine Netzwerkschnittstelle enthält eine Koppelvorrichtung und eine Steueranordnung. Die Koppelvorrichtung enthält Wegespeicheranordnungen, die jeweils einem Empfangsanschluß zugeordnet ist. Anhand der Wegespeicheranordnungen werden bei Empfang einer Zelle die entsprechenden durch die Schaltmodi vorgegebenen Schalt- oder Kopplungsvorgänge in der Koppelvorrichtung durchgeführt. Beispielsweise wird eine eintreffende Zelle zu der Steueranordnung, zur Station und/oder zum Ring weitergeleitet. Die Steueranordnung ist beispielsweise für den Verbindungsaubau und -abbau zuständig.

Bei Verwendung eines asynchronen Transfermodus in einem System werden Nutzinformationen, z.B. Fernsprech-, Bild- oder Tonsignale, in Blöcken fester Länge über Anordnungen zur digitalen Signalverarbeitung gesendet. Als ein Block fester Länge wird eine Zelle bezeichnet, die eine vorbestimmte Anzahl von Bytes (z.B. 53 Bytes) aufweist. Jede Zelle besteht aus einem Kopffeld mit einer Länge von beispielsweise 5 Byte und einem Informationsfeld, in dem die Nutzinformation untergebracht ist, mit einer Länge von beispielsweise 48 Byte. In einem solchen Kopffeld sind Adreßinformationen, Daten zur Fehlererkennung und Daten für Steuerinformationen vorhanden. Unter Adreßinformationen Fällt eine Bündelkennung, die als VPI (Virtual Path Identifier) bezeichnet wird, und eine Verbindungskennung, die als VCI (Virtual Channel Identifier) bezeichnet wird. Zusammen ergeben also VPI und VCI eine virtuelle Verbindung oder einen virtuellen Kanal an. Ein Bündel mehrerer virtueller Kanäle wird als virtueller Pfad bezeichnet, der durch die Bündelkennung gekennzeichnet wird.

Der Erfindung liegt die Aufgabe zugrunde, ein flexibles lokales, nach dem asynchronen Transfermodus arbeitendes Netzwerk zu schaffen.

Die Erfindung wird durch ein lokales, nach dem asynchronen Transfermodus arbeitendes Netzwerk der eingangs genannten Art dadurch gelöst,
daß wenigstens eine Netzwerkschnittstelle eine Funkvorrichtung zum Austausch von Daten mit Wenigstens einem im Funkabdeckungsbereich der Netzwerkschnittstelle liegenden Terminal enthält und
daß die Koppelvorrichtung zum Transport der Zellen wenigstens zwischen Ringanschlüssen und der Funkvorrichtung vorgesehen ist.

Erfindungsgemäß sind eine oder mehrere Netzwerkschnittstellen mit einer Funkvorrichtung versehen, die über eine Funkstrecke mit einem oder mehreren Terminals gekoppelt sind. Bestimmte andere Netzwerkschnittstellen können über Drahtverbindungen mit Stationen oder anderen Netzwerken verbunden sein. Die Netzwerkschnittstellen sind dabei über eine oder mehrere Ringverbindungen zu einem Ring zusammengeschaltet. Die in einer Netzwerkschnittstelle oder einem Terminal zur Funkübertragung anstehenden Zellen (ATM-Zellen) werden mit Steuer- und Zusatzinformationen versehen und als Paketeinheit auf die Funkstrecke gegeben. Hierbei kann eine Paketeinheit einen Teil einer Zelle, eine komplette Zelle oder mehrere Zellen enthalten. Zur Funkübertragung können das TDMA-, das FDMA- oder das CDMA-Verfahren (TDMA = Time Division Multiplex Access; FDMA = Frequency Division Multiplex Access; CDMA = Code Division Multiplex Access) verwendet werden. Die Verfahren können gegebenenfalls auch kombiniert werden. Beispielsweise kann eine bestimmte Trägerfrequenz einer Netzwerkschnittstelle und den im Funkabdeckungsbereich der Netzwerkschnittstelle liegenden Terminals zugeordnet sein. Die Funkübertragung zwischen einer Netzwerkschnittstelle und den Terminals kann dann nach dem Zeitmultiplexverfahren erfolgen.

Die in einer Netzwerkschnittstelle von der Funkvorrichtung empfangenen oder vom Ring empfangenen Zellen werden in der Schaltvorrichtung zum Ring und/oder zur Funkvorrichtung und/oder zur Steuerschaltung weitergeleitet. Hierbei werden Kontrollzellen, die beispielsweise für den Verbindungsaufbau und -abbau zuständig sind, und Anwenderzellen vermittelt, die für eine bestehende Verbindung Anwenderinformationen enthalten. Es stehen also zwei Arten von Zellen zur Verfügung: eine Kontrollzelle und eine Anwenderzelle.

Bei der Erfindung können also mehrere Terminals in dem Funkabdeckungsbereich einer Netzwekschnittstelle vorhanden sein. Diese können beliebig, ohne weitere aufwendige Dahtverbindungen zu schaffen, zu- oder abgeschaltet werden, wodurch das lokale Netzwerk für die Anwender flexibel wird. Unter einem Anwender ist z.B. ein Benutzer eines Programms in einem Terminal, ein Programm selber, gespeicherte Daten (Terminal als Datenbank) oder auch ein Fernsprechteilnehmer zu verstehen.

In der Koppelvorrichtung einer Netwerkschnittstelle ist jeweils eine einem Empfangsanschluß zugeordnete Empfangsschaltung enthalten, die jeweils zur Auswertung des Kopffeldes einer empfangenen Zelle vorgesehen ist. Anhand der aus der Kopfzelle gewonnenen Information entnimmt eine Empfangsschaltung einen Schaltmodus aus der zugeordneten Wegespeicheranordnung.

In der Wegespeicheranordnung können für verschiedene virtuelle Verbindungen Schaltmodi gespeichert sein. Für die mit der Funkvorrichtung gekoppelte Wegespeicheranordnung sind sechs Schaltmodi vorgesehen. Ein erster Schaltmodus ist für eine Verbindung wenigstens zwischen zwei lokalen Terminals vorgesehen, bei dem die Koppelvorrichtung die mit der Funkvorrichtung verbundenen Empfangs- und Sendeanschlüsse koppelt. Ein zweiter Schaltmodus ist für eine Verbindung wenigstens zwischen einem lokalen und einem entfernten Terminal vorgesehen, bei dem die Koppelvorrichtung den mit der Funkvorrichtung verbundenen Empfangsanschluß und einen mit einem Ring verbundenen Sendeanschluß koppelt. Ein dritter Schaltmodus ist für eine Verbindung zwischen Wenigstens zwei lokalen und wenigstens einem entfernten Terminal vorgesehen, bei dem die Koppelvorrichtung den mit der Funkvorrichtung verbundenen Empfangsanschluß mit dem mit der Funkvorrichtung verbundenen Sendeanschluß und mit einem mit einem Ring verbundenen Sendeanschluß koppelt. Ein vierter Schaltmodus ist für eine Verbindung zwischen einem lokalen Terminal und der lokalen Steueranordnung vorgesehen, bei dem die Koppelvorrichtung den mit der Funkvorrichtung verbundenen Empfangsanschluß mit der lokalen Steueranordnung koppelt. Ein fünfter Schaltmodus ist für eine Verbindung zwischen einem lokalen Terminal und der lokalen und wenigstens einer entfernten Steueranordnung vorgesehen, bei dem die Koppelvorrichtung den mit der Funkvorrichtung verbundenen Empfangsanschluß mit der lokalen Steueranordnung und einen mit einem Ring verbundenen Sendeanschluß koppelt. Beim sechsten Schaltmodus werden Zellen mit nicht vorhandenen Verbindungen gelöscht.

Die Schaltmodi für eine virtuelle Verbindung werden während des Verbindungsaufbaus festgelegt. Die Speicherung eines Schaltmodus für eine virtuelle Verbindung in einer Wegespeicheranordnung führt die entsprechende Steueranordnung durch. Die Wegespeicheranordnung ist dabei zur Speicherung der Verbindungsart, des Zelltyps und des Schaltmodus unter der Kennzeichnung für eine virtuelle Verbindung vorgesehen. Eine virtuelle Verbindung kennzeichnen zusammen die im Kopffeld einer Zelle enthaltenen VCI (virtual channel identifier) und VPI (virtual path identifier). Die Art der Verbindung gibt an, ob eine Einzel-Verbindung (unicast connection) bzw. Punkt-zu-Punkt-Verbindung, eine Mehrfach-Verbindung (multicast connection) bzw. Punkt-zu-Multipunkt-Verbindung oder Verteil-Verbindung (broadcast connection) vorliegt.

Ein Terminal enthält ebenso wie eine Netzwerkschnittstelle eine Funkvorrichtung mit einer Hochfrequenzschaltung, einem Modem und einer Protokollvorrichtung. Die Funkvorrichtung eines Terminals tauscht Daten mit der Funkvorrichtung der zugeordneten Netzwerkschnittstelle aus. Hierbei überträgt ein Terminal Identifikationsdaten über einen Registrierungskanal, MAC-Signalisierungsdaten (MAC = medium access control) über einen MAC-Signalisierungskanal und Nutzinformationen über wenigstens einen Transportkanal. Die Nutzinformationen enthalten wenigstens einen Teil einer Zelle. Über den MAC-Signalisierungskanal werden dem Terminal von der Netzwerkschnittstelle beispielsweise der für die Übertragung von Nutzinformationen zuständige Transportkanal oder -kanäle mitgeteilt.

Eine Netzwerkschnittstelle in dem lokalen Netzwerk hat noch eine Zusatzaufgabe. Diese ist zur Steuerung des Verbindungsaufbaus und -abbaus jeder virtuellen Verbindung vorgesehen. Wenn ein Anwender eine Verbindung mit einem anderen Anwender wünscht, prüft diese Netzwerkschnittstelle, ob dies möglich ist.

Die Erfindung bezieht sich auch auf eine Netzwerkschnittstelle für ein lokales, nach dem asynchronen Transfermodus (ATM) arbeitendes Netzwerk zur Übertragung von Zellen, die mit mehreren in einem Ring geschalteten und über Ringanschlüsse gekoppelten Netzwerkschnittstellen, die jeweils eine Koppelvorrichtung enthalten, gekoppelt ist. Hierbei enthält die Netzwerkschnittstelle eine Funkvorrichtung zum Austausch von Daten mit wenigstens einem im Funkabdeckungsbereich der Netzwerkschnittstelle liegenden Terminal. Die Koppelvorrichtung ist zum Transport der Zellen wenigstens zwischen Ringanschlüssen und der Funkvorrichtung vorgesehen.

Ausführungsbeispiele der Erfindung werden nachstehend anhand der Figuren näher erläutert. Es zeigen:
- Fig. 1: ein lokales Netzwerk,
- Fig. 2: eine in dem lokalen Netzwerk nach Fig. 1 verwendbare Netzwerkschnittstelle,
- Fig. 3: ein mit einer Netzwerkschnittstelle nach Fig. 2 über eine Funkstrecke gekoppeltes Terminal,
- Fig. 4: eine in einer Netzwerkschnittstelle nach Fig. 2 oder einem Terminal nach Fig. 3 enthaltenen Funkvorrichtung und
- Fig. 5: verschiedene Schaltmodi einer Koppelvorrichtung, die in einer Netzwerkschnittstelle nach Fig. 2 enthalten ist.

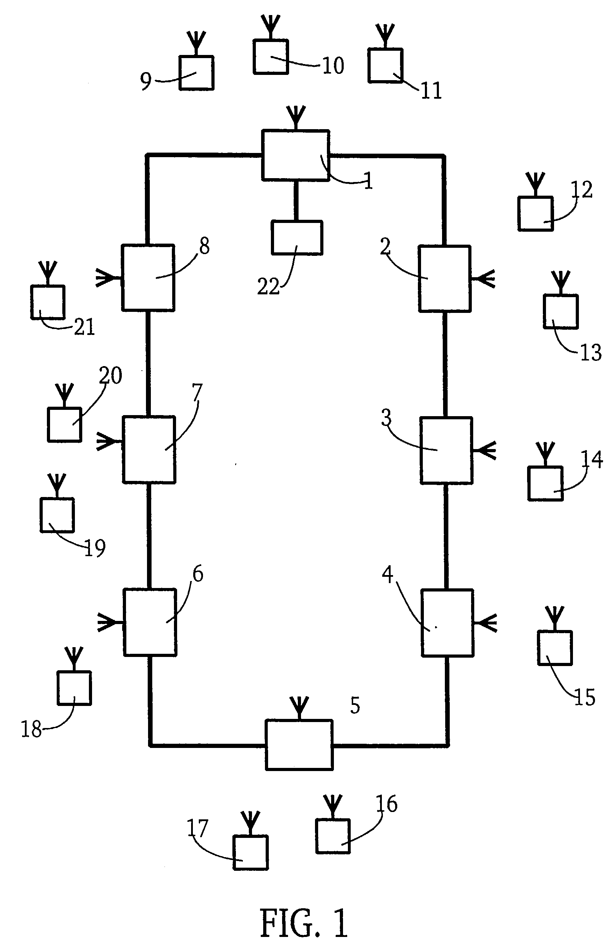

In Fig. 1 ist ein Ausführungsbeispiel eines lokalen Netzwerks mit 8 Netzwerkschnittstellen 1 bis 8 mit jeweils mindestens zwei Ringanschlüssen zur Bildung wenigstens eines Ringes dargestellt. Das lokale Netzwerk kann auch einen oder mehrere weitere Ringe enthalten. Bei der Verwendung von zwei Ringen kann der Informationsfluß über die Ringe gegenläufig sein.

Mit einer Netzwerkschnittstelle 1 bis 8 sind verschiedene Terminals 9 bis 21 über Funkübertragungswege gekoppelt. Eine Netzwerkschnittstelle 1 bis 8 und ein Terminal 9 bis 21 enthalten jeweils eine Funkvorrichtung zum Transfer von Informationen oder Nachrichten über die Funkübertragungswege. In dem Ausführungsbeispiel nach der Fig. 1 sind der Netzwerkschnittstelle 1 die Terminals 9, 10 und 11, der Netzwerkschnittstelle 2 die Terminals 12 und 13, der Netzwerkschnittstelle 3 das Terminal 14, der Netzwerkschnittstelle 4 das Terminal 15, der Netzwerkschnittstelle 5 die Terminals 16 und 17, der Netzwerkschnittstelle 6 das Terminal 18, der Netzwerkschnittstelle 7 die Terminals 19 und 20 und der Netzwerkschnittstelle 8 das Terminal 21 zugeordnet.

Ein Terminal 9 bis 21 enthält außer einer Funkvorrichtung beispielsweise einen Bildfernsprecher, einen Personal-Computer, eine Workstation oder einen Fernsprecher.

Innerhalb des Rings werden Nachrichten bzw. Informationen zwischen den Netzwerkschnittstellen 1 bis 8 nach dem asynchronen Transfermodus (ATM) mittels Zellen übertragen. Zwischen den Terminals (9 bis 21) und der jeweils zugeordneten Netzwerkschnittstelle (1 bis 8) werden Teile einer Zelle oder auch eine oder mehrere Zellen über eine Funkstrecke übertragen. Die Teile einer Zelle oder eine oder mehrere Zellen werden dabei mit für die Funkübertragung notwendigen weiteren Steuer- und Zusatzinformationen (Overhead) versehen.

Eine Zelle enthält ein Kopffeld mit beispielsweise 5 Byte und ein Informationsfeld mit beispielsweise 48 Byte. Die im Kopffeld der Zelle enthaltenen Informationen dienen insbesondere zur Adressierung und zur Durchführung von Vermittlungsfunktionen.

Die Netzwerkschnittstelle 1 ist noch mit einer Datenbank 22 gekoppelt, über die beispielsweise Daten für einen Verbindungsaufbau entnommen werden können, die über die Ressourcen der jeweiligen Terminals 9 bis 21 oder über die Netzwerktopologie Auskunft geben kann. Hierbei ist die Netzwerkschnittstelle 1 zusätzlich noch für die Verwaltung von Daten und zur Steuerung des Verbindungsaufbaus und -abbaus vorgesehen.

Die Funkübertragung zwischen einem Terminal (9 bis 21) und einer zugeordneten Netzwerkschnittstelle (1 bis 8) kann nach einem TDMA-, FDMA- oder CDMA-Verfahren (TDMA = Time Division Multiplex Access; FDMA = Frequency Division Multiplex Access; CDMA = Code Division Multiplex Access) durchgeführt werden. Die Verfahren können gegebenenfalls auch kombiniert werden. Beispielsweise ist ein Zeitschlitz eines Rahmens nach dem TDMA-Verfahren für eine bestimmte Verbindung einem Terminal zugeordnet. Die Dauer eines Zeitschlitzes könnte einem ganzzahligen Teil oder der Dauer einer oder einem Vielfachen einer Zelle und zusätzlichen für die Funkübertragung notwendigen Steuer- und Zusatzinformationen entsprechen. Den Netzwerkschnittstellen (1 bis 8) und den zugeordneten Terminals (9 bis 21) können dabei jeweils unterschiedliche Trägerfrequenzen zugeordnet sein. Die Zuordnung eines Zeitschlitzes für eine Verbindung wird z.B. während des Verbindungsaufbaus von der Netzwerkschnittstelle 1 und/oder pro Zeitabschnitt (Rahmen) in Abhängigkeit von den Anforderungen der betroffenen Terminals festgelegt. Es ist auch möglich nur das TDMA-Verfahren für das gesamte lokale Netzwerk anzuwenden. Hierbei ist jeweils ein Zeitabschnitt (Unterrahmens) eines Überrahmens einer Netzwerkschnittstelle zugeordnet.

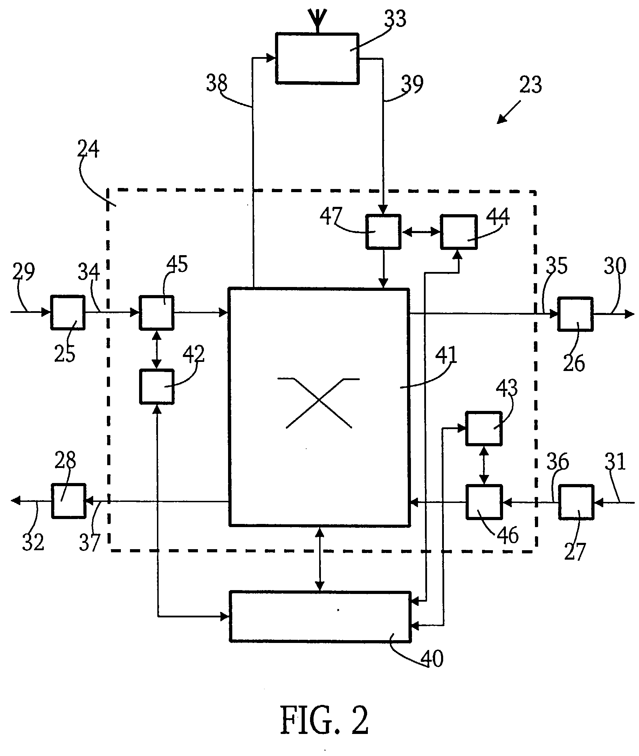

Eine Netzwerkschnittstelle 1 bis 8 nach Fig. 1, die jeweils Bestandteil von zwei gegenläufigen Ringen ist und im folgenden mit dem Bezugszeichen 23 angegeben wird, ist in der Fig. 2 detaillierter dargestellt. In einem lokalen Netzwerk können auch Netzwerkschnittstellen eingesetzt werden, die Bestandteil eines Ringes oder von mehr als zwei Ringen sind. Die Netzwerkschnittstelle 23 enthält eine Koppelvorrichtung 24, die über Pufferspeicher 25 bis 28 mit Ringanschlüssen 29 bis 32 und einer Funkvorrichtung 33 gekoppelt ist und den Zellenstrom vermittelt. Die Funkvorrichtung 33 ist über die Anschlüsse 38 und 39 mit der Koppelvorrichtung 24 gekoppelt.

Der Pufferspeicher 25 ist einerseits mit dem Empfangs-Ringanschluß 29 des ersten Rings und andererseits mit einem Anschluß 34, der zur Koppelvorrichtung 24 führt, gekoppelt. Der Pufferspeicher 25 erhält noch ein erstes Empfangstaktsignal, welches aus dem Zellenstrom des Empfangs-Ringanschlusses 29 abgeleitet ist, und ein internes Taktsignal von einem Taktgenerator der Netzwerkschnittstelle 23. Der Pufferspeicher 26 ist über einen Anschluß 35 mit der Koppelvorrichtung 24 gekoppelt und liefert einen Zellenstrom an den Sende-Ringanschluß 30 des ersten Ringes. Dem Pufferspeicher 26 wird das interne Taktsignal und ein erstes Sende-Taktsignal geliefert, welches beispielsweise aus dem internen Taktsignal abgeleitet ist.

Der Pufferspeicher 27 erhält einen Zellenstrom von dem Empfangs-Ringanschluß 31 eines zweiten Ringes und liefert einen Zellenstrom über einen Anschluß 36 zur Koppelvorrichtung 24. Von einem Anschluß 37 der Koppelvorrichtung 24 empfängt der Pufferspeicher 28 Zellen, die an den Sende-Ringanschluß 32 des zweiten Ringes weiterleitet werden. Der Pufferspeicher 27 erhält ein zweites Empfangstaktsignal, welches aus dem Zellenstrom des Empfangs-Ringanschlusses 31 abgeleitet ist, und das interne Taktsignal. Dem Pufferspeicher 28 wird das interne Taktsignal und ein zweites Sende-Taktsignal geliefert, welches beispielsweise aus dem internen Taktsignal abgeleitet ist.

In den Pufferspeichern 25 bis 28 findet jeweils eine Anpassung des Zellenstroms an ein Taktsignal statt. Die Ableitung der verschiedenen Taktsignale aus dem Zellenstrom und die Erzeugung des internen Taktsignals im Taktgenerator sind hier nicht näher dargestellt.

In der Netzwerkschnittstelle 23 ist noch eine die Koppelvorrichtung 24 steuernde Steueranordnung 40 enthalten, die beispielsweise zum Verbindungssaufbau und -abbau dient. Die Steueranordnung 40, die als Mikroprozessor realisiert sein kann, erhält und erzeugt ebenfalls Zellen. In der Koppelvorrichtung 24 ist noch ein Koppelfeld 41, drei Wegespeicheranordnungen 42, 43 und 44 und drei Empfangsschaltungen 45, 46 und 47 enthalten. In den Empfangsschaltungen 45, 46 und 47 werden jeweils die Kopffelder von über Anschlüssen 29, 31 und 39 ankommenden Zellen ausgewertet.

Im Kopffeld enthaltene Adresseninformationen werden zur Ansteuerung verschiedener Tabellen für die mit den Empfangsschaltungen 45, 46 und 47 verbundenen Wegespeicheranordnungen 42, 43 und 44 verwendet. Die in den Tabellen abgelegten Daten werden jeweils von den Empfangsschaltungen 45, 46 und 47 verwendet, um die weitere Verarbeitung und Weiterleitung der Zelle zu organisieren. Beispielsweise kann die Empfangsschaltung 45 die Zelle kopieren und mit neuen Adresseninformationen versehen. Die Originalzelle wird z.B. über das Koppelfeld 41 an die Funkvorrichtung 33 und die kopierte Zelle über das Koppelfeld 41 an den Pufferspeicher 26 gegeben. Es besteht noch die Möglichkeit, daß das Koppelfeld 41 solche Funktionen wie diese Kopierfunktion durchführt.

Die Empfangsschaltung 45 ist über den Anschluß 34 mit dem Pufferspeicher 25 gekoppelt und leitet empfangene Zellen zum Koppelfeld 41 weiter. Die Wegespeicheranordnung 42 ist mit der Empfangschaltung 45 verbunden. Die Empfangsschaltung 46, die mit der Wegespeicheranordnung 43 verbunden ist, erhält Zellen von dem Pufferspeicher 27 und gibt Zellen an das Koppelfeld 41 weiter. Zwischen dem Koppelfeld 41 und dem Anschluß 39 ist die Empfangsschaltung 47 angeordnet, die mit der Wegespeicheranordnung 44 verbunden ist.

Über die Ringanschlüsse 29 und 30 des ersten Ringes, über die Ringanschlüsse 31 und 32 des zweiten Rings und über die Anschlüsse 38 und 39 werden zwei Arten von Nutzzellen übertragen. Einerseits Anwenderzellen (user cells), die in ihrem Informationsfeld z. B. Nachrichten oder Daten des Benutzers einer zuvor aufgebauten Verbindung enthalten und andererseits Kontrollzellen (signalling cells), die in ihrem Informationsfeld Steuerungsinformationen enthalten.

Bestimmte Bits im Kopffeld einer Zelle sind für den VCI (virtual channel identifier) und für den VPI (virtual path identifier) reserviert. Der VPI gibt ein Bündel mehrerer virtueller Verbindungen an. Für den VPI sind im Kopffeld der Zelle nach derzeitigen Normungsbestimmungen 8 Bit und für den VCI 16 Bit vorgesehen.

Bei diesem Ausführungsbeispiel kennzeichnen der VPI und der VCI zusammen eine virtuelle Verbindung zwischen mindestens zwei Anwendern durch eine Nummer und werden während des Verbindungsaufbaus jeweils festgelegt. Unter einem Anwender ist z.B. ein Benutzer eines Programms in einem Terminal, ein Programm selber, gespeicherte Daten (Terminal als Datenbank) oder auch ein Fernsprechteilnehmer zu verstehen. Zusätzlich gibt der VPI noch ein Bündel von virtuellen Verbindungen an. Beim Verbindungsaufbau werden bestimmte Attribute, die den durch VPI und VCI gekennzeichneten Verbindungen zugeordnet sind, in den Tabellen der Wegespeicheranordnungen 42 bis 44 gespeichert. Ein Attribut gibt beispielsweise die Verbindungsart einer virtuellen Verbindung an.

Unter einer Verbindungsart ist eine Einzel-Verbindung (unicast connection), eine Mehrfach-Verbindung (multicast connection) oder eine Verteil-Verbindung (broadcast connection) zu verstehen. Bei einer Einzel-Verbindung oder Ende-zu-Ende-Verbindung besteht eine virtuelle Verbindung eines Anwenders eines ersten Terminals mit einem Anwender eines zweiten Terminals. Bei einer Mehrfach-Verbindung oder Punkt-zu-Multipunkt-Verbindung sind mehrere Anwender von Terminals miteinander verbunden. Bei einer Verteil-Verbindung liefert eine Sendeterminal an alle anderen Terminals Zellen mit gleichem Inhalt im Informationsfeld.

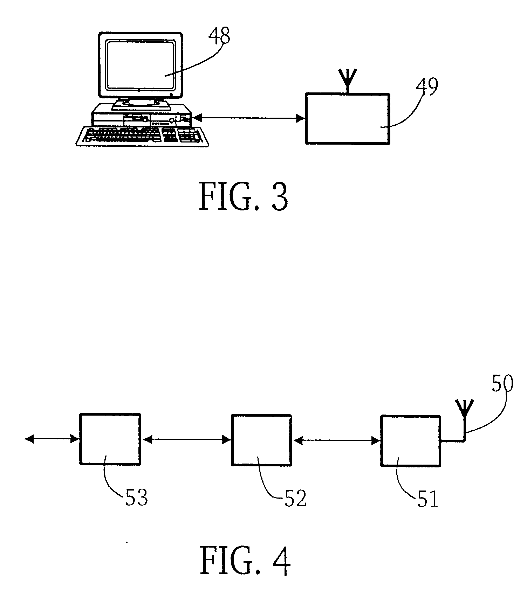

Ein Terminal 9 bis 21 kann beispielsweise aus einem Personal-Computer 48 und einer Funkvorrichtung 49 bestehen, wie Fig. 3 zeigt. Der Personal-Computer 48 tauscht Zellen mit der Funkvorrichtung 49 aus, welche zur Funkübertragung mit der zugeordneten Netzwerkschnittstelle (1 bis 8) zuständig ist.

Die Funkvorrichtung 33 in der Netzwerkschnittstelle 23 und die Funkvorrichtung 49 in einem Terminal (9 bis 21) enthalten eine Antenne 50, eine Hochfrequenzschaltung 51, ein Modem 52 und eine Protokollvorrichtung 53 (Fig. 4). Außer der Protokollvorrichtung 53 benötigen die anderen Schaltelemente 50 bis 52 der Funkvorrichtung 33 und 49 keine weitere Erläuterung, da diese aus anderen Funkvorrichtungen bekannte Schaltungselemente sind. Die Protokollvorrichtung 53 bildet aus dem empfangenen ATM-Zellenstrom Paketeinheiten, welche jeweils zumindestens Teile einer ATM-Zelle und Steuerinformationen enthalten, und wendet hierbei die für den Mehrfachzugriff in einem Funkübertragungsmedium geeigneten und fehlerreduzierenden Protokolle an. Diese Protokolle beziehen sich auf das OSI-Schichtenmodell. Hierbei ist die Sicherungsschicht des OSI-Schichtenmodelles relevant. Diese enthält wenigstens zwei weitere Teilschichten: LLC- und MAC-Schicht. Die MAC-Schicht steuert den Mehrfachzugriff der Terminals zum Übertragungsmedium (Funkübertragungsmedium). Die LLC-Schicht (LLC = Logical Link Control) führt eine Fluß- und Fehlerkontrolle durch. Zur MAC- und LLC-Schicht kann weiteres beispielsweise dem Buch "Computer Networks" von Andrew S. Tanenbaum, Second Edition, Prentice-Hall International, Inc., 1988, Seiten 117 bis 131, 196 bis 212 und 262 bis 265 entnommen werden.

Im folgenden sei vorausgesetzt, daß der Datenaustausch zwischen den Terminals 9 bis 21 und den Netzwerkschnittstellen 1 bis 8 nach dem TDMA- und dem FDMA-Verfahren (Zeitmultiplex- und Frequenzmultiplexverfahren) auf dem Funkübertragungsweg durchgeführt wird. Die Netzwerkschnittstellen 1 bis 8 und die zugeordneten Terminals 9 bis 21 übertragen Daten auf jeweils einer unterschiedlichen Trägerfrequenz (FDMA). Für die Übertragung von Daten zwischen einer Netzwerkschnittstelle und einem zugeordneten Terminal werden zugewiesene Zeitschlitze verwendet (TDMA). Ein Rahmen enthält einen kollisionsbehafteten Kanal oder Zeitschlitz (im folgenden als Registrierungskanal bezeichnet), mehrere kollisionsfreie MAC-Signalisierungskanäle- oder zeitschlitze für jedes Terminal und Transportkanäle oder' -zeitschlitze für Nutzinformationen. Auf den Registrierungskanal kann jedes Terminal zugreifen, wodurch Kollisionen mit anderen Terminals entstehen können. Über den Registrierungskanal läßt sich ein Terminal nach dem Einschalten bei der zugeordneten Netzwerkschnittstelle registrieren. Ein MAC-Signalisierungskanal ist einem Terminal fest zugeordnet und dient dazu, die MAC-Steuerungsinformationen zwischen dem Terminal und der Netzwerkschnittstelle auszutauschen. Die MAC-Steuerungsinformationen entstammen dem zur MAC-Schicht zugehörigem, Protokoll und dienen z.B. zur dynamischen Reservierung der Transportzeitschlitze für die Nutzinformation. Hierbei teilt das jeweilige Terminal der Netzwerkschnittstelle mit, wieviele Zellen jeweils in einem Puffer zur Übertragung bereitstehen. Die Netzwerkschnittstelle weist z.B. in Abhängigkeit des Pufferfüllstandes von zur Übertragung anstehenden Zellen der im gesamten Funkabdeckungsbereich liegenden Terminals die Tranportkanäle den einzelnen Terminals zu. Hierbei wird die Zuweisung in der Regel vor jedem neuen Zeitrahmen erneuert. Auch die Zuweisung für die gesamten Transportkanäle kann dynamisch erfolgen. Das bedeutet, daß bei einem ersten Rahmen mehr Kanäle für die Übertragung vom Terminal zur Netzwerkschnittstelle als Kanäle für die Übertragung von der Netzwerkschnittstelle zum Terminal und bei einem anderen Rahmen mehr Kanäle für den Transport der Zellen von der Netzwerkschnittstelle zum Terminal als Kanäle für die Übertragung von der Netzwerkschnittstelle zum Terminal vergeben. Ein Verfahren für eine MAC-Signalisierung kann z.B. der Veröffentlichung "Medium Access Control Protocol for wireless, transparent ATM access" von D. Petras, IEEE Wireless Communication Systems Symposium, Long Island, NY, Seiten 79 bis 84, November 1995 entnommen werden.

Nach dem Inbetriebsetzen eines Terminals sendet dieses der zugeordneten Netzwerkschnittstelle (z.B. Netzwerkschnittstelle 5) einen Registrierungswunsch mit der dem Terminal zugeordneten Identifikationsnummer (ID-Nummer) über den Registrierungskanal. Der Registrierungswunsch wird nach Empfang in der Funkvorrichtung 33 von der Koppelvorrichtung 24 nach Befragen der Wegespeicheranordnung 44 zur Steueranordnung 40 gesendet. Der Registrierungswunsch des Terminals wird mittels einer Kontrollzelle von der Steueranodnung 40 der Netzwerkschnittstelle 5 über den Ring zur Netzwerkschnittstelle 1 gesendet, welche die Identifikationsnummer des Terminals in der Datenbank 22 ablegt. Der Empfang in der Netzwerkschnittstelle 1 wird mittels einer zur Steueranordnung 40 der Netzwerkschnittstelle 5 gesandten Kontrollzelle quittiert und dann eine weitere Quittierungsmeldung zum Terminal zurückgesendet. Außer der Quittierungsmeldung bekommt das Terminal auch die Angabe über den zugewiesenen MAC-Signalisierungskanal mitgeteilt.

Die Steueranordnung 40 einer Netzwerkschnittstelle steuert den Verbindungsaufbau und -abbau zwischen Anwendern von Terminals. Es werden hierbei ähnliche Steuerungsvorgänge verwendet, wie sie beispielsweise in der europäischen Patentanmeldung EP 0 641 105 A2 beschrieben sind.

Im folgenden soll beispielhaft der Verbindungsaubau zwischen zwei Anwendern von Terminals beschrieben werden. Das der Netzwerkschnittstelle 6 zugeordnete Terminal 18 mit einem Anwender A₁ möchte mit einem Anwender A₂ des der Netzwerkschnittstelle 2 zugeordneten Terminals 12 eine Verbindung aufbauen.

Hierbei wird vorausgesetzt, daß mittels der MAC-Signalisierung der Austausch von ATM-Zellen (Anwender- und Kontrollzellen) über die Funkstrecke zwischen einem Terminal und der entsprechenden Netzwerkschnittstelle realisiert wird. Die Schaltungsanordnungen der MAC-Schicht ermöglichen unabhängig vom Inhalt der ATM-Zellen die oben genannte dynamische Zeitschlitzzuweisung.

Von dem Terminal 18 werden zuerst Kontrollzellen mit einem Verbindungswunsch erzeugt und über die Netzwerkschnittstellen 6, 7 und 8 zur Netzwerkschnittstelle 1 übertragen. Die Steueranordnung 40 der Netzwerkschnittstelle 1 empfängt Kontrollzellen mit einem Verbindungswunsch und prüft dann, ob eine solche Verbindung möglich ist (z.B. wird geprüft, ob Terminal 12 registriert ist). Wenn die Verbindung erlaubt ist, wird dieser virtuellen Verbindung ein für den Ring gültiger VPI und VCI zugewiesen. Mittels Kontrollzellen teilt die Netzwerkschnittstelle 1 den Steueranordnungen 40 der Netzwerkschnittstellen 2 und 6 mit, daß eine virtuelle Verbindung zwischen den Terminals 12 und 18 aufgebaut ist. Dabei werden auch die der virtuellen Verbindung zugeordneten VPI und VCI und die für den Ring reservierte Übertragungskapazität mitgeteilt. Die jeweiligen Steueranordnungen 40 der Netzwerkschnittstellen 2 und 6 müssen noch prüfen, ob für die virtuelle Verbindung zu dem jeweiligen Terminal 12 bzw. 18 genügend Übertragungskapazität über die Funkstrecke vorhanden ist. Es muß für die Funkstrecke dabei für eine Verbindung eine genügende Übertragungskapazität im Durchschnitt zur Verfügung stehen. Diese kann jedoch von Rahmen zu Rahmen variieren. Zuständig für die dynamische Zeitschlitzzuordnung sind Schaltungsanordnungen der MAC-Schicht. Die Netzwerkschnittstellen 2 und 6 teilen jeweils ihren Terminals 12 und 18 über die Funkstrecke die von Ihnen jeweils für die Funkstrecke vorgesehenen VPI und VCI für die Verbindung mit. Es können also für die Funkstrecke und den Ring unterschiedliche, aber korrespondierende VPI und VCI zugewiesen werden.

In den Netzwerkschnittstellen 1 bis 8 müssen Tabellen in bestimmten Wegespeicheranordnungen noch verändert werden. Hierbei wird ein bestimmter Schaltmodus für den VPI und VCI der virtuellen Verbindung in den Tabellen eingestellt. Diese Tabellenänderung wird über Kontrollzellen angestoßen, die von der Netzwerkschnittstelle 1 ausgesendet werden und von den Steueranordnungen 40 der Netzwerkschnittstellen 2 bis 8 empfangen und ausgewertet werden. Die eigentliche Tabellenänderung führt die Steueranordnung jeder Netzwerkschnittstelle 1 bis 8 durch. Hierbei werden in die Wegespeicheranordnung 44 die der Funkstrecke zugeordneten VPI und VCI und in die Wegespeicheranordnungen 42 und 43 die dem Ring zugeordneten VPI und VCI abgelegt.

Beispielsweise leitet die Netzwerkschnittstelle 6 eine vom Terminal 18 ausgesendete und empfangene Zelle an seinen entsprechenden Sende-Ringanschluß weiter. Den eigentlichen Schaltvorgang führt die Koppelvorrichtung 24 der Netzwerkschnittstelle 6 durch, die nach Auswertung der Tabelle in der Wegespeicheranordnung 44 den vom Terminal 18 empfangenen Zellstrom beispielsweise an den Sende-Ringanschluß 30 der Netzwerkschnittstelle 6 weiterleitet.

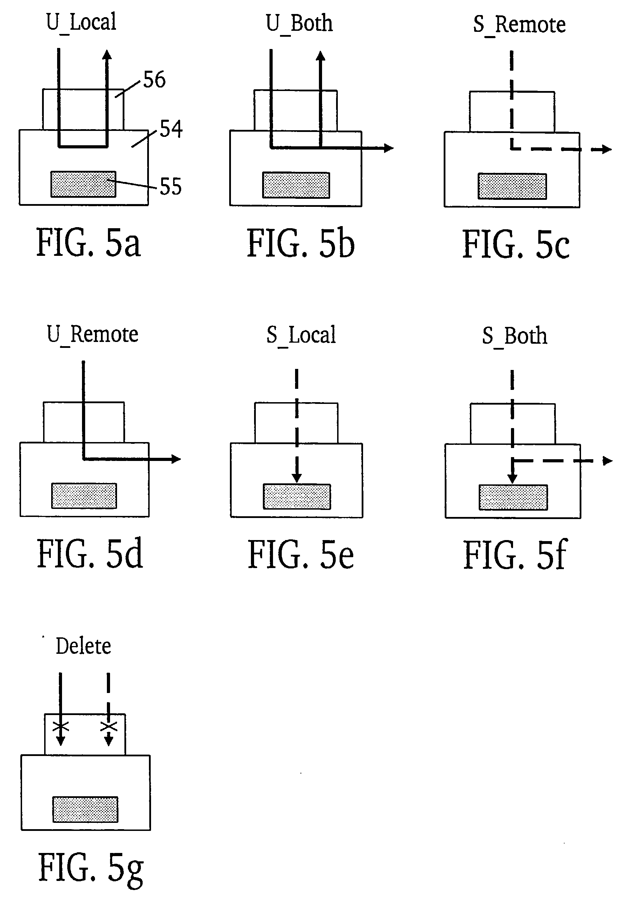

Für die unterschiedlichen Verbindungsarten, den Empfänger von Zellen und den VPI und VCI sind in den Wegespeicheranordnungen 42 bis 44 verschiedene Schaltmodi gespeichert. In Fig. 5 sind die verschiedenen Schaltmodi, die in der Wegespeicheranordnung 44 ablegbar sind, skizziert. Der Zellstrom, der sich auf Anwenderzellen bezieht, ist mit einer durchgezogenen Linie, und der Zellstrom, der sich auf Kontrollzellen bezieht, ist mit einer unterbrochenen Linie eingezeichnet. In Fig. 5a sind exemplarisch die Netzwerkschnittstelle mit dem Bezugszeichen 54, die darin enthaltene Steueranordnung mit dem Bezugszeichen 55 und die Funkvorrichtung 33, die Empfangsschaltung 47 und die Wegespeicheranordnung 44 mit dem Bezugszeichen 56 versehen.

Fig. 5a zeigt den Schaltmodus "U_Local", bei dem Anwenderzellen von einem Terminal empfangen worden sind und die über die Koppelvorrichtung 24 zurück zur Funkschnittstelle gegeben werden. Als Funkschnittstelle soll im folgenden allgemein die Funkstrecke mit den jeweiligen zuständigen Funkvorrichtungen 33 und 49 bezeichnet werden. Dieser Schaltmodus wird für alle Anwenderzellen einer Punkt-zu-Punkt- und einer Punkt-zu-Multipunkt-Verbindung verwendet. Die zur Verbindung gehörenden Terminals befinden sich dabei im Funkabdeckungsbereich der die Schaltfunktion durchführenden Netzwerkschnittstelle (lokale Netzwerkschnittstelle).

Der Schaltmodus "U_Both" gemäß Fig. 5b empfängt von der Funkschnittstelle Anwenderzellen, die zu einem Sende-Ringanschluß zur Sendung an eine andere Netzwerkschnittstelle und zur Funkschnittstelle zurück geliefert werden. Dieser Schaltmodus wird für Anwenderzellen bei Punkt-zu-Multipunkt-Verbindungen verwendet, bei dem wenigstens ein zur Verbindung gehörendes Terminal im Funkabdeckungsbereich der lokalen Netzwerkschnittstelle und wenigstens ein anderes zur Verbindung gehörendes Terminal im Funkabdeckungsbereich einer anderen Netzwerkschnittstelle liegt. Dieser Schaltmodus wird auch bei einer Verteil-Verbindung benötigt.

Kontrollzellen, die über die Funkschnittstelle einer lokalen Netzwerkschnittstelle empfangen werden, werden nach dem Schaltmodus "S_Remote" gemäß Fig. 5c von der Koppelvorrichtung 24 zu einem Sende-Ringanschluß gegeben, von wo sie zu einer anderen Netzwerkschnittstelle gelangen. Dieser Schaltmodus wird für Kontrollzellen einer Punkt-zu-Punkt-Verbindung verwendet, bei dem eine Steueranordnung 40 einer anderen Netzwerkschnittstelle der Empfänger der Kontrollzellen ist. Auch bei einer Punkt-zu-Mehrpunkt-Verbindung, bei der verschiedene Steueranordnungen 40 anderer Netzwerkschnittstellen die Empfänger sind, ist der Schaltmodus "S_Remote" vorgesehen.

Fig. 5d zeigt den Schaltmodus U_Remote, der bewirkt, daß Anwenderzellen von der Funkschnittstelle zum Sende-Ringanschluß gegeben werden. Dieser Schaltmodus wird für Anwenderzellen bei Punkt-zu-Punkt- oder einer Punkt-zu-Multipunkt-Verbindung verwendet. Bei der Punkt-zu-Punkt-Verbindung befindet sich das Emmpfangs-Terminal im Funkabdeckungsbereich einer nicht die Schaltfunktion durchführenden Netzwerkschnittstelle. Bei einer Punkt-zu-Multipunkt-Verbindung befinden sich alle Anwenderzellen empfangenden Terminals im Funkabdeckungsbereich einer oder mehrerer anderer Netzwerkschnittstellen.

Die Fig. 5e und 5f betreffen Schaltmodi von Kontrollzellen, welche über die Funkschnittstelle der lokalen Netzwerkschnittstelle eintreffen. Beim Schaltmodus "S_Local" gemäß Fig. 5e werden alle empfangenen Kontrollzellen einer Punkt-zu-Punkt- oder Punkt-zu-Multipunkt-Verbindung zur Steueranordnung 40 der lokalen Netzwerkschnittstelle geleitet. Der Schaltmodus "S_Both" gemäß Fig. 5f wird bei bestimmten Punkt-zu-Multipunkt- oder Verteil-Verbindungen angewendet. Dabei werden die Kontrollzellen zur Steueranordnung 40 der lokalen Netzwerkschnittstelle und zu Steueranordnungen 40 von anderen Netzwerkschnittstellen geleitet.

Beim Schaltmodus "Delete" gemäß Fig. 5g werden Anwender- oder Kontrollzellen in der Koppelvorrichtung 24 gelöscht, wenn diese weder zu den im Funkabdeckungsbereich der lokalen Netzwerkschnittstelle liegenden Terminals noch zu anderen in anderen Funkabdeckungsbereichen liegenden Terminals gelangen sollen.

Die in der Wegespeicheranordnung 44 befindliche Tabelle kann nun die folgenden Einträge aufweisen:

| Empfangsort des/der Anwender | Verbindungsart | Schaltmodus |
|---|---|---|
| lokales Terminal | Unicast/Anwenderzelle | U_Local |
| mehrere lokale Terminals | Multicast/Anwenderzelle | U_Local |
| entferntes Terminal | Unicast/Anwenderzelle | U_Remote |
| mehrere entfernte Terminals | Multicast/Anwenderzelle | U_Remote |
| wenigstens ein lokales Terminal und wenigstens ein entferntes Terminal | Multicast/Anwenderzelle | U_Both |
| irrelevant | Broadcast/Anwenderzelle | U_Both |
| lokale Steueranordnung | Unicast/Kontrollzelle | S_Local |
| lokale Steueranordnung | Multicast/Kontrollzelle | S_Local |
| entfernte Steueranordnung | Unicast/Kontrollzelle | S_Remote |
| alles entfernte Steueranordnungen | Multicast/Kontrollzelle | S_Remote |
| wenigstens eine lokale Steueranordnung und wenigstens eine entfernte Steueranordnung | Multicast/Kontrollzelle | S_Both |
| irrelevant | Broadcast/Kontrollzelle | S_Both |
| irrelevant | alle nicht vorhandenen Verbindungen | Delete |

Die Tabelle weist außerdem hier nicht dargestellte VPI- und VCI-Einträge auf. So kann beispielsweise unter einem ersten VPI- und VCI-Eintrag als Empfangsort ein Anwender eines lokalen Terminals, als Verbindungsart eine Unicast- oder Punkt-zu-Punkt-Verbindung für eine Anwenderzelle und als Schaltmodus "U_Local" aufgeführt sein. Weiter können unter einem VPI- und VCI-Eintrag als Empfangsort mehrere Anwender der lokalen Steueranordnung, als Verbindungsart eine Multicast- oder Punkt-zu-Multipunkt-Verbindung für eine Kontrollzelle und als Schaltmodus "S_Local" eingetragen sein. Es sei hier noch bemerkt, daß für den Verbindungsaufbau und -abbau für die Kontrollzellen bestimmte vorgegebene VCI- und VPI-Kombinationen reserviert sind.

Die Tabelle gibt für alle vorkommenden Empfangsorte und Verbindungsarten für Zellen, die über die Funkschnittstelle eintreffen, den Schaltmodus an. Unter einem lokalen Terminal ist ein im Funkabdeckungsbereich der lokalen Netzwerkschnittstelle liegendes Terminal und unter einem entfernten Terminal ein im Funkabdeckungsbereich einer anderen Netzwerkschnittstelle befindliches Terminal zu verstehen. Die lokale Steueranordnung ist die Steueranordnung 40 der lokalen Netzwerkschnittstelle und eine entfernte Steueranordnung eine Steueranordnung 40 einer anderen Netzwerkschnittstelle. Es kann noch vorkommen, daß beispielsweise eine Zelle mit einem irrelevanten VPI und VCI für eine Broadcast- oder Verteil-Verbindung empfangen wird.In diesem Fall wird bei einer Anwender- und Kontrollzelle der Schaltmodus "U_Both" bzw. "S_Both" verwendet. Für alle nicht vorhandenen Verbindungen mit einem irrelevanten Empfangsort werden die Zellen gelöscht (Schaltmodus: "Delete").

## Patentansprüche

1. Lokales, nach dem asynchronen Transfermodus (ATM) arbeitendes Netzwerk zur Übertragung von Zellen mit mehreren in einem Ring geschalteten und über Ringanschlüsse (29 bis 32) gekoppelten Netzwerkschnittstellen (1 bis 8), die jeweils eine Koppelvorrichtung (24) enthalten,
dadurch gekennzeichnet,
daß wenigstens eine Netzwerkschnittstelle (1 bis 8) eine Funkvorrichtung (33) zum Austausch von Daten mit wenigstens einem im Funkabdeckungsbereich der Netzwerkschnittstelle (1 bis 8) liegenden Terminal (9 bis 21) enthält und
daß die Koppelvorrichtung (24) zum Transport der Zellen wenigstens zwischen Ringanschlüssen (29 bis 32) und der Funkvorrichtung (33) vorgesehen ist.

2. Lokales Netzwerk nach Anspruch 1,
dadurch gekennzeichnet,
daß in der Koppelvorrichtung (24) jeweils eine einem Empfangsanschluß (39) zugeordnete Empfangsschaltung (47) enthalten ist,
daß jede Empfangsschaltung (47) zur Auswertung des Kopffeldes einer empfangenen Zelle vorgesehen ist und
daß zumindestens anhand der aus der Kopfzelle gewonnenen Information eine Empfangsschaltung (47) zur Entnahme eines Schaltmodus aus der zugeordneten Wegespeicheranordnung (44) vorgesehen ist.

3. Lokales Netzwerk nach Anspruch 2,
dadurch gekennzeichnet,
daß die Wegespeicheranordnung (44), welche mit dem von der Funkvorrichtung (33) ausgehenden Empfangsanschluß (47) gekoppelt ist, zur Speicherung
- eines ersten Schaltmodus für eine Verbindung wenigstens zwischen zwei lokalen Terminals (9 bis 21) vorgesehen ist, bei dem die Koppelvorrichtung (24) die mit der Funkvorrichtung (33) verbundenen Empfangs- und Sendeanschlüsse (38, 39) koppelt,
- eines zweiten Schaltmodus für eine Verbindung wenigstens zwischen einem lokalen und einem entfernten Terminal (9 bis 21) vorgesehen ist, bei dem die Koppelvorrichtung (24) den mit der Funkvorrichtung (33) verbundenen Empfangsanschluß (39) und einen mit einem Ring verbundenen Sendeanschluß (30, 32) koppelt,
- eines dritten Schaltmodus für eine Verbindung zwischen wenigstens zwei lokalen und wenigstens einem entfernten Terminal (9 bis 21) vorgesehen ist, bei dem die Koppelvorrichtung (24) den mit der Funkvorrichtung (33) verbundenen Empfangsanschluß (39) mit dem mit der Funkvorrichtung (33) verbundenen Sendeanschluß (38) und mit einem mit einem Ring verbundenen Sendeanschluß (30, 32) koppelt,
- eines vierten Schaltmodus für eine Verbindung zwischen einem lokalen Terminal (9 bis 21) und der lokalen Steueranordnung (40) vorgesehen ist, bei dem die Koppelvorrichtung (24) den mit der Funkvorrichtung (33) verbundenen Empfangsanschluß (39) mit der lokalen Steueranordnung (40) koppelt,
- eines fünften Schaltmodus für eine Verbindung zwischen einem lokalen Terminal (9 bis 21) und der lokalen und wenigstens einer entfernten Steueranordnung (40) vorgesehen ist, bei dem die Koppelvorrichtung (24) den mit der Funkvorrichtung (33) verbundenen Empfangsanschluß (39) mit der lokalen Steueranordnung (40) und einen mit einem Ring verbundenen Sendeanschluß (30, 32) koppelt und
- eines sechsten Schaltmodus zum Löschen von Zellen mit nicht vorhandenen Verbindungen vorgesehen ist.

4. Lokales Netzwerk nach Anspruch 3,
dadurch gekennzeichnet,
daß bei einem Verbindungsaufbau die Steueranordnung (40) zur Speicherung des zur virtuellen Verbindung gehörenden Schaltmodus wenigstens einer Wegespeicheranordnung (42 bis 44) vorgesehen ist.

5. Lokales Netzwerk nach Anspruch 4,
dadurch gekennzeichnet,
daß die im Kopffeld einer Zelle enthaltenen VCI (virtual channel identifier) und VPI (virtual path identifier) zusammen zur Kennzeichnung einer virtuellen Verbindung, vorgesehen sind und
daß die Wegespeicheranordnung (42 bis 44) zur Speicherung der Verbindungsart, des Zelltyps und des Schaltmodus unter dieser Kennzeichnung vorgesehen sind.

6. Lokales Netzwerk nach einem der Ansprüche 1 bis 5,
dadurch gekennzeichnet,
daß ein Terminal (9 bis 21) ebenso wie eine Netzwerkschnittstelle (1 bis 8) eine Funkvorrichtung (33, 49) mit einer Hochfrequenzschaltung (51), einem Modem (52) und einer Protokollvorrichtung (53) enthält,
daß die Funkvorrichtung (49) eines Terminals zum Austausch von Daten mit der Funkvorrichtung (33) der zugeordneten Netzwerkschnittstelle vorgesehen ist,
daß ein Terminal (9 bis 21) zur Austausch von Identifikationsdaten über einen Registrierungskanal, von MAC-Signalisierungsdaten (MAC = medium access control) über einen MAC-Signalisierungskanal und von Nutzinformationen über wenigstens einen Transportkanal vorgesehen ist und
daß die Nutzinformationen wenigstens einen Teil einer Zelle enthalten.

7. Lokales Netzwerk nach einem der Ansprüche 1 bis 6,
dadurch gekennzeichnet,
daß eine Netzwerkschnittstelle (1) zur Steuerung des Verbindungsaufbaus und -abbaus vorgesehen ist.

8. Netzwerkschnittstelle (1 bis 8) für ein lokales, nach dem asynchronen Transfermodus (ATM) arbeitendes Netzwerk zur Übertragung von Zellen, die mit mehreren in einem Ring geschalteten und über Ringanschlüsse (29 bis 32) gekoppelten Netzwerkschnittstellen (1 bis 8), die jeweils eine Koppelvorrichtung (24) enthalten, gekoppelt ist,
dadurch gekennzeichnet,
daß die Netzwerkschnittstelle (1 bis 8) eine Funkvorrichtung (33) zum Austausch von Daten mit wenigstens einem im Funkabdeckungsbereich der Netzwerkschnittstelle (1 bis 8) liegenden Terminal (9 bis 21) enthält und
daß die Koppelvorrichtung (24) zum Transport der Zellen wenigstens zwischen Ringanschlüssen (29 bis 32) und der Funkvorrichtung (33) vorgesehen ist.
